# EUROPEAN PATENT SPECIFICATION

(11) **EP 2 073 502 B1**
(45) Date of publication and mention of the grant of the patent: **18.09.2013**
(21) Application number: 07123898.4
(22) Date of filing: 21.12.2007
(51) Int. Cl.: H04L 29/08, H04L 12/58, G06Q 10/00

(54) **Providing communication services at a mobile terminal in dependence of a foreign recipient's contact data**
Bereitstellen von Kommunikationsdiensten auf einem mobilen Endgerät in Abhängigkeit von Kontaktdaten eines fremden Empfängers
Mise à disposition de services de communications sur un terminal mobile en fonction des coordonnées d'un destinataire étranger

(43) Date of publication of application: 24.06.2009
(60) Divisional application: 12189258.2
(73) Proprietor: Vodafone Holding GmbH, 40213 Düsseldorf (DE)
(72) Inventor: Knight, John, Rickmansworth, Herts, WD3 8ND (GB); Curson, Ian, London E8 2LY (GB)
(74) Representative: Cullinane, Marietta Bettina

(56) References cited:
- EP-A1- 1 484 703
- WO-A-2006/058967
- GB-A- 2 409 298
- US-A1- 2004 078 448
- US-A1- 2006 031 331
- US-A1- 2006 168 026
- US-A1- 2006 190 546
- US-A1- 2007 081 649

## Description

The present invention relates to a method for providing communication services at a mobile terminal, as well as to a system for providing the communication service at a mobile terminal and to a mobile terminal.

The number of services applicable to mobile terminals, that means usable from a mobile terminal such as a mobile phone, is constantly increasing. A user who is interested in a specific service, such as an email service, will have the information on the mandatory registration steps and the address of the service provider at hand or can look up the respective information. If the user, however, intends to communicate with other users, he might not be aware of the services used by the other users. In general, a communication service requires registration with the respective service provider and/or requires the downloading of an application to the device where the communication service is to be used. If a user receives contact information of an intended communication partner, they will have to determine the services used by the other user and carry out the respective registration or set-up routines manually. This process is cumbersome and error prone as the user may not be aware of the appropriate service or service provider necessary for communication with individual contact data information. For example, an email address does not always have the name of the service provider in the domain part. In some cases aliases are used.

The handling of contact data on a mobile device is for example described in GB 2 409 298 A. This document discloses a method for updating or adding to a stored contacts data entry. According to this document the user requests further specific information about a contact which is stored in a database on his computing device from a remote computing device. The specific items, which may for example be the landline number for a contact whose mobile number is already stored on the mobile computing device, have to be requested by the owner of the contact store.

There also have been approaches to facilitate the set-up of communication services. For example in WO 2006/058967 A1 a provisioning of email settings for a mobile phone is suggested. In the system according to this document the provisioning is initiated by the user requesting settings for a specific email address. During the provisioning, a server parses the domain part of the email address as supplied by the user and determines the settings corresponding to this domain part. Even though this approach may facilitate the set-up of appropriate email settings, it has several disadvantages. Firstly, the user already has to be registered with the email service provider, i.e. has to have user authentication information. Furthermore, the user actively has to indicate which service they intend to use. This approach may be beneficial for providing email settings to a mobile device; it can, however, not address the problems which a user faces, who receives contact information from a foreign user.

The handling of foreign contact information includes additional challenges. In some cases, the address for a service does not include any indication of the service provider. This is for example true for most real time messaging services. In these cases the user has to be registered in order to obtain access to a respective user interface. From this interface the address of the foreign user can be used.

Furthermore US 2006/0031331 A1 describes a real-time communication system. Herein the e-mail correspondence of a user is monitored to determine whether a thread of e-mails which is exchanged with another user can be detected. In that case, a prompt will be issued to the user offering to change to an IM-session with that user. In this system the IM service thus already has to be set-up in order to be able to change to an IM session.

Also US 2006/0190546 A1 describes the provision of an IM-chat-opportunity from an e-mail which is displayed. For this purpose in the beginning a software module is loaded to a computer and the user provides user names and passwords for all his e-mail accounts and IM accounts during this original installation. The thus available information is subsequently used to log the user on to all e-mail- and IM-accounts. Hence, also in this system the communication services have to have been set-up beforehand.

US 2004/0078448 A1 relates to initiating an IM chat session. A session of an IM service is initiated from an e-mail. Log-in names and passwords are already available. Hence, the communication services have to have been set-up beforehand.

The problem to be solved by the present invention is thus to provide a solution which facilitates the discovery and set-up of communication services for a user of a mobile terminal.

The invention is based on the finding that this problem can be solved by automating the discovery of the required service and possibly even the set-up of the respective service.

According to a first aspect, the problem is solved by a method for providing communication services at a mobile terminal of a mobile communication network. The method is characterized in that it comprises the following steps, which are carried out by at least one part of the mobile communication network:
- receiving at least one set of foreign contact data, which is a set of contact data on a person who is not the user of the mobile terminal, at a mobile terminal;
- analysing the set of foreign contact data,
- extracting at least one piece of information relating to a communication service from the set of foreign contact data,
- determining the communication service details of the communication service to which the extracted piece of information relates, and
- triggering a set-up process for the determined communication service wherein the set-up process comprises the step of comparing the determined communication service to communication services presently available at the mobile terminal and the set-up routines of the set-up process is limited to new communication services which the user of the mobile terminal (1) is not registered for or does not have the necessary access to.

The mobile communication network is preferably a cellular communication network. The parts of the mobile communication network, where the steps of the inventive method can be carried out, comprise a mobile terminal and a central processing unit. The mobile terminal is preferably a mobile phone but may also be any other mobile device capable of communicating via the mobile communication network. The central processing unit is preferably the network server of the mobile communication network operator. The central processing unit may, however, also be a server or other network component. In particular, network components connected to the network server may be a central processing unit according to the present invention.

The set of foreign contact data according to the present invention denotes information on a person, who is not the user of the mobile terminal at which the communication service is to be provided. It should be noted, that the term "foreign contact data" does not exclude contact data from a person who is known to the user of the terminal at which the communication service is to be provided. Hence, the foreign set of data could relate to a friend of the user or to a person not previously known to the user. The set of contact data in particular comprises at least one address of the foreign user for at least one communication service. Preferably, the set of foreign contact data comprises more than one address of the foreign user for a communication service. In the latter case the discovery of communication services is more complex and the advantages of the present invention can thus be used efficiently. It is obvious to the person skilled in the art, however, that even though the present invention is mainly described with reference to a set of foreign contact data comprising more than one entry of a an address for a communication service, the invention also applies to sets of foreign contact data which comprises only one address or other contact data for a communication service. In some cases an address or other contact data to a communication service itself without additional information will represent the set of foreign contact data. The following description will mainly refer to one set of foreign contact data being received at the mobile terminal. It is, however, to be noted that the present invention also applies to cases where multiple sets of foreign contact data are provided to the mobile terminal.

The set of foreign contact data may be provided in any kind of digital format. The set of foreign contact data may preferably be marked as a set of contact data. This marking can be the format of the set of foreign contact data. By handling a set of foreign contact data, which is marked as a set of foreign contact data, the processing at the different parts of the communication network can be minimized. In these cases the further steps of the inventive method will only be carried out, if the received contact data is recognized as a set of foreign contact data. This is advantageous, as the steps of the method will not be triggered in cases where the user for example receives an email from the foreign user. Also in this case, the received data comprises the address of the foreign user for a communication service but the received data is not marked as a set of foreign contact data. Preferably, the set of foreign contact data which is handled according to the inventive method is a set of foreign contact data which is received in a format different to the format of the communication service used for the transmission of the set of foreign contact data. For example, a set of foreign contact data attached to an email should be handled according to the inventive method, whereas the receipt of an email as such in general should not initiate the inventive method, as the user already is using the communication service necessary to communicate with the foreign user. It is preferable but not mandatory, that the set of foreign contact data is provided according to the format of an organiser application. Such organizer applications sort contact data in a set of contact data by fields such as name, telephone number, email address, real time messaging address, etc. With sets of foreign contact data having such a format, the analyzing and extraction of information is facilitated.

The set of foreign contact data can be received at the mobile terminal via different communication channels. The set of foreign contact data may for example be transmitted to the mobile terminal via the mobile communication network of which the mobile terminal is part. This receipt of the set of foreign contact data is preferable, since no additional communication interfaces have to be provided at the mobile terminal. It is, however, also possible that the set of foreign contact data is received for example via a local connection to a different device, e.g. via Bluetooth, cable or other local communication connections. The local connection can be established with a device owned by the foreign user or by the user of the mobile terminal to which the set of foreign contact data is to be transmitted, for example the personal computer of the user. The transmission of the set of foreign contact data from the personal computer of the user of the mobile terminal may, for example, occur when the user synchronizes his devices. Additionally or alternatively, the set of foreign contact data may also be received at the mobile terminal by means of manual or voice input by the user at the mobile terminal or by scanning information from a card or any other source. In this context it should be noted that receiving according to the present invention also relates to editing, adding or deleting of at least part of a set of foreign contact data.

Sets of foreign contact data which have already been stored at the mobile terminal and subsequently arrive at the mobile terminal in an unchanged version will preferably not trigger the inventive method. An addition to a set of foreign contact data which is already stored at the mobile terminal, such as an address for a communication service of a user, whose contact data is already stored at the mobile terminal, will preferably trigger the inventive method. Also the receipt of a changed or extended set of foreign contact data will preferably trigger the inventive method. Therefore, the inventive method may comprise a step of identifying new foreign contact data. In this identifying step unknown or unassigned foreign contact data will be identified as being new foreign contact data. The new foreign contact data may be a whole new set of foreign contact data or may only comprise a new address for a communication service of a user, whose contact data is already stored at the mobile terminal.

The step of analyzing the set of foreign contact data preferably comprises analysing the sequence of data to determine the structure of the set of data. In this step, for example, the format of an organizer application may be identified. Furthermore, the analyzing step may comprise analyzing the individual structural elements. In cases, where the set of foreign contact data is sorted by fields, the analyzing step may include the detection of the fields as well as the determination of whether entries are present in the fields. The analyzing step may also be referred to as parsing.

The extraction of at least one piece of information from the set of foreign contact data is carried out after the analyzing step and is preferably based on the analyzing result. During the analyzing step it can be identified which information is relative to a communication service which is applicable to mobile terminals. Applicable to mobile terminals in this context refers to communication services, which can be used from a mobile terminal. These communication services may at least partially be executed on the mobile terminal but may be stored remotely. The information on the communication services which are applicable to mobile terminals may be indicia of the provider of the respective communication service, such as the name of the provider, an abbreviation or alias of the name of the provider. The information may also be the name of the communication service.

By extracting this information from the set of foreign contact data, the information will be available for further usage; in particular for the determination of communication service details. These details preferably comprise the address of the provider, in particular the URL-address. The details may further comprise indications of requirements for the use of the communication service, in particular set-up requirements. The communication service details for specific communication services may be stored in a data base.

These communication service details or the extracted pieces of information relating to the determined communication service are used to trigger the set-up process for the communication service. The set-up process may represent the mere display of part of the respective communication service details or information on the service or service provider at the mobile terminal, e.g. the name of the communication service. Preferably, the set-up process, however, includes further steps, which allow the user of the terminal to use the communication service from their mobile device and/or from any other device. In particular, registration with the service provider for using the respective communication service is preferably included in the set-up process. Providing of a communication service at a mobile terminal according to the present invention, hence, includes the mere information of the user on potential communication services as well as possibly the provisioning with additional information or data for the communication service.

With the present invention it will, hence, be possible for a user of a mobile phone to be informed on communication services which a foreign user utilizes. In addition to the discovery of possible communication services, the present invention also allows for actual set-up routines of the communication service to be initiated automatically, i.e. without the need of user interaction. The inventive method is applicable for all occasions where new contact information relating to a service that the user does not currently subscribe to becomes available.

The set-up process comprises the step of comparing the determined communication service to communication services presently available at the mobile terminal. Communication services presently available at the mobile terminal may be services where at least part of the required application is stored on the mobile terminal and/or where the service is accessible from the mobile terminal. It is, however, also possible that the availability of a communication service at the mobile terminal is dependent on the user of the mobile terminal. In this case, the registration of a user with a specific service is sufficient to consider the communication service to be available at the mobile terminal. The information on the availability of the communication service at the mobile terminal can be derived from information stored on the mobile terminal, a central processing unit of the mobile communication network or on a subscriber module of the mobile terminal, such as a SIM card. By comparing the determined communication service used by the foreign user to the services available at the mobile terminal or at least available to the user of the mobile terminal, it will be possible to only inform the user in case of a negative comparison result. In contrast, if the determined communication is already available to the user or at the mobile terminal, the method according to the present invention will be terminated and the user will not be disturbed.

The set of foreign contact data may be analyzed, e.g. parsed, after it has been received at the mobile terminal. It is, however, also possible that the set of foreign contact data is analyzed before being received at the mobile terminal. In this case, the analysis can be carried out during the transmission, for example via the mobile communication network.

According to one embodiment, at least the analysis of the set of foreign contact data is carried out at a network entity of the mobile communication network. Parts of the mobile communication network which are located on the network side are referred to as network entities. These entities comprise in particular a network server of the network operator. One advantage of analyzing the set of foreign contact data at a network entity is that the communication with other network entities or access to other entities, such as data bases, can be carried out faster and easier than from a mobile terminal of the mobile communication network. In addition, network entities such as network servers are designed to analyze data, in particular to parse data packages. Hence, no considerable changes to the network entities are necessary.

Alternatively, the analyzing step may be carried out at the mobile terminal. In this case, the set of foreign contact data may be analyzed when being added to a contact folder or organizer application on the mobile terminal. As the set of foreign contact data has to be analyzed in order to be integrated into the structure of the contact folder or the application, the inventive method can easily be integrated into the normal routine of receiving contact data at a mobile terminal.

The set-up process preferably includes at least one set-up routine and/or at least one prompt for the user. The prompt for the user may be displayed at the mobile terminal of the user. The contents of the prompt may be the invitation to the user to accept the set-up of a specific communication service. The contents may also be the invitation to the user to provide personal information, such as to select a personal password. The set-up routines which may be included in the set-up process may be routines for downloading software, opening registration forms, directing the user to a site in the Internet, etc. The information necessary for the set-up routines can be obtained from either the user by prompting him or from a part of the mobile communication network. In particular, information stored on the SIM card or in a personal profile of the user on a network server or on the mobile terminal may be used to obtain this information. The details and requirements of the set-up routine may be obtained from a data base or from a server of the service provider offering the specific communication service.

Analyzing the set of foreign contact data may be initialized by a transmission of the set of foreign contact data to or from the mobile terminal. In this case, the analyzing of the set of foreign contact data may for example be initialized when a Vcard or an Email with a signature is received on the mobile terminal. The analyzing step may also be initiated, when synchronizing foreign contact entries on the mobile terminal with foreign contact entries in a personal folder or profile on the network server. In either case, this embodiment of the present invention ensures that the user will at least be informed of communication services which they might need in order to communicate with the user from whom the set of foreign contact data has been sent. Also when editing a set of foreign contact data at the mobile terminal, the analyzing can be initiated. Additionally or alternatively, the analyzing of the set of foreign contact data can be initiated by input of at least part of a set of foreign contact data at the mobile terminal by the user. When a set of foreign contact data is deleted from the mobile terminal this may also trigger analyzing of the set of foreign contact data. In this case, the set-up process which may be triggered may include a un-subscription or deregistration process.

Preferably, the communication services are services which require registration of the user with the service provider of the service. In some cases, the registration may include or be substituted by the requirement of downloading an application for obtaining a user interface for the communication service at the mobile terminal. For services requiring registration or download, the inventive method is particularly advantageous, as the user will preferably not have to find the appropriate location for registration or download manually. Instead, the set-up process may run the appropriate routines for the registration or download.

The piece of information which is extracted from the set of foreign contact data is preferably an indication of a service provider, in particular an email service provider, a real time messaging service provider and/or organization service provider. In addition, preferably an indication of the specific communication service will be extracted from the set of foreign contact data. The indication may be the name of the service provider, e.g. the domain name, or the name of the communication service. With this information it is possible to trigger the appropriate set-up process for the respective service.

According to a further aspect, the present invention relates to a system for providing communication services at a mobile terminal of a mobile communication network, comprising at least one mobile terminal and at least one central processing unit. The system is characterized in that it comprises an analyzing unit for analyzing sets of foreign contact data, an extraction unit for extracting information from the set of foreign contact data based on the relation of the information to communication services and at least one handling unit for handling the extracted information, wherein the handling unit is connected to at least one set-up unit for determination of a communication service to which the extracted information relates and set-up of the determined communication service, wherein the set-upprocess comprises the step ofcomparing the determined communication service to communication services presently available at the mobile terminal and the set-up routine of the set-up process is limited to new communication services which the user of the mobile terminal is not registered for or does not have the necessary access to.

Each of the units may be connected to other parts of the mobile communication network or other sources, such as external data bases, to obtain information necessary for their function. By connecting the handling unit with a set-up unit, the information extracted from a set of foreign contact data can be used to trigger the appropriate set-up process.

The analyzing and extraction unit may be located on the network side. By providing these units on the network side, access to relevant data for the analysis and the extraction can easily be obtained. In addition, the location of the analyzing and extraction units on the network side is advantageous in that the set of foreign contact data can be analyzed and the respective information can be extracted during transmission of the set of foreign contact data. As most users also use the mobile communication network to store their personal data or personal profiles, including foreign contact data, the network side location of the analyzing unit and the extraction unit, allow for the analysis and extraction to be performed when a user synchronizes his personal data, in particular contact data.

Alternatively, the analyzing and extraction unit may be located on the mobile terminal. As the set of foreign contact data is intended to be received at the mobile terminal, the location of these units at the mobile terminal will ensure that all new sets of foreign contact data which are received will be processed according to the present invention. Also in this context receiving of set of foreign contact data is to be understood as adding, editing and/or deleting at least part of a set of foreign contact data.

The set-up unit preferably comprises a comparator for comparing communication service details derived from the extracted information to communication service details obtained from a user profile unit. Alternatively, also the extracted pieces of information may be compared to pieces of information relating to communication services obtained from a user profile unit. In the user profile unit the communication services for which the user has been registered are stored. The user profile may include the personal contact details of the user. Such personal details preferably comprise addresses of the user of the mobile terminal for communication services, e.g. his email address or real time messaging address. By providing the comparator in the system, the information which is given to the user of the mobile terminal or the set-up routines can be limited to the ones relating to new communication services which the user of the mobile terminal is not registered for or does not have the necessary access to, e.g. user interface application.

The units used in the present invention can be realized in hard ware, software and/or a combination of hardware and software.

According to a further aspect, the present invention relates to a mobile terminal for carrying out the inventive method comprisingat least an analyzing unit for analyzing sets of foreign contact data, an extraction unit for extracting information from the set of foreign contact data based on the relation of the information to communication services applicable to mobile terminals and at least one handling unit for handling the extracted information, wherein the handling unit is connected to at least one set-up unit for determination of a communication service and set-up of the determined communication service, wherein the set-up process comprises the step of comparing the determined communication service to communication services presently available at the mobile terminal (1) and the set-up routine of the set-up process is limited to new communication services which the user ofthe mobile terminal (1) is not registered for or does not have thenecessary access to . In particular, the analyzing and extraction unit of the system may be provided at the mobile terminal. It is, however, also possible that the handling unit and/or the set-up unit are provided at the mobile terminal. The mobile terminal is preferably designed such that the inventive method can be performed therewith.

Features and advantages which are described with respect to the inventive method also -where applicable- relate to the inventive system and the inventive mobile terminal and vice versa.

The present invention will now be described again with reference to the enclosed Figures, wherein:
Figure 1 shows a schematic view of a mobile communication network;
Figure 2 shows a flow chart of one embodiment of method according to the present invention; and
Figure 3 shows a flow chart of another embodiment of the method according to the present invention.

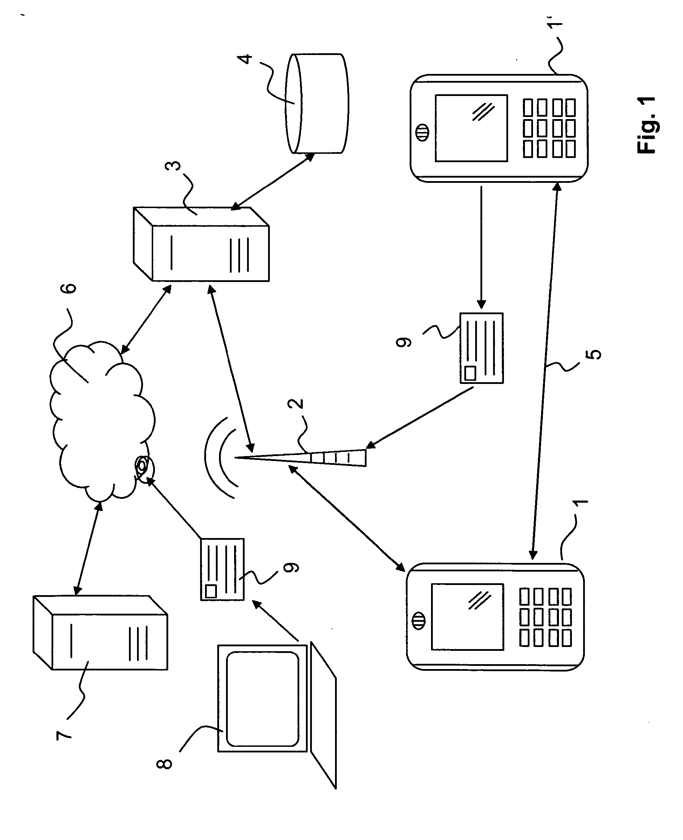

In Figure 1 a mobile terminal 1 is depicted as a mobile phone. This mobile terminal 1 can communicate with other mobile terminals 1' via the mobile communication network 2, which is indicated in Figure 1 by a base station. The mobile communication network 2 is operated by the mobile communication network operator via a network server 3. The network server 3 in Figure 1 is connected to a data base 4 and can also access other servers 7 for example via the Internet 6. Figure 1 further shows a personal computer PC 8 which may communicate with the mobile terminals 1 and 1' via the Internet 6. The mobile terminals 1 and 1' may also communicate via a local connection, such as a Bluetooth connection, which is indicated in Figure 1 by reference number 5.

For the following description of the present invention, mobile terminal 1 will be referred to as the mobile terminal of user A and mobile terminal 1' will be referred to as the mobile terminal of user B.

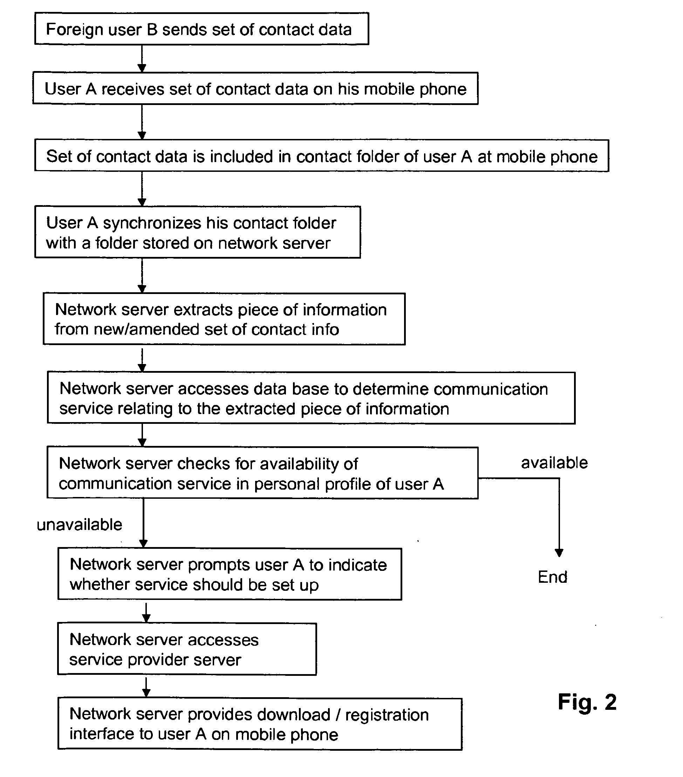

By way of example, one embodiment of the method according to the invention will now be explained with reference to Figure 2.

User B intends to provide user A with their contact details, which are schematically depicted in Figure 1 as a Vcard 9. These contact details are a set of foreign contact data for user A. The Vcard or set of foreign contact data 9 may for example include the email address and real time messaging address of user B. The email address may be XYZ@vodafone.com and the real time messaging address may be XYZ at ABC IM. User B may send the Vcard 9 via the mobile communication network 2. User A receives the set of foreign contact data 9 at their mobile terminal 1. The data from the set of foreign contact data 9 is included in a contact folder or contact application on mobile terminal 1 or on a subscriber module SIM of user A in mobile terminal 1. The contact folder or contact application is preferably also stored on the network server 3 of the mobile communication network 2. The contact folder may be stored in a user profile of user A on the network server 3 or on a server connected to network server 3. If user A wishes to synchronize their contact folder with the entries of their user profile on the network server 3, this will be performed via the mobile communication network 2. During the transmission and synchronization of the contact folder, the data contained therein is parsed. Also the new data received from user B will be parsed. This data will be recognized as being a new set of foreign contact data 9. The network server 3 extracts a piece of information relating to a communication service from the set of foreign contact data 9. In the present example, the network server 3 will extract the email address of user B and the real time messaging address from the set of foreign contact data 9.

The network server 3 may look up in a data base 4 which communication services are related to the extracted pieces of information. For the email address the domain part of the email will be used to identify the communication service and the service provider offering the service. For the real time messaging address, the indication ABC IM will be used to identify the service and the service provider.

The thus identified or discovered services and service providers will be compared against the entries of a personal profile of user A, where their contact details are stored. These contact details of user A comprise all the addresses and indications of communication services which user A currently is registered for or can use. The communication services and service providers discovered with respect to the set of foreign contact data 9 of user B are then compared against the personal contact details of user A. Thereby the availability of the services used by user B to user A will be checked.

If user A, for example, does not user the same service provider for email services as user B, the network server 3 may generate a prompt to user A to be displayed at their mobile terminal 1. The prompt may include the question whether user A wishes to register with the service provider currently used by user B for email services. If the user confirms this request, network server 3 may access the server 7 of the service provider of user B and display the registration form to user A on their mobile terminal 1. Alternatively, network server 3 upon confirmation from user A to the registration request may access the server 7 of the service provider and supply personal information or data to the service provider from the personal profile of user A on the network server 3. In this case user A will only have to respond to prompts such as supply of a password etc. User A can then use the same service provider as user B.

If it is determined that user A is not registered with the real time messaging service that user B currently uses, the network server 3 may generate a respective prompt to user A to be displayed on their mobile terminal 1. The prompt may include the question whether user A wishes to register with the real time messaging service of user B. If confirmed by user A, the network server may access the server 7 of the real time messaging service provider and may obtain the necessary information for downloading an application allowing access to the service as well as for registration. This information will be made available to user A at their mobile terminal 1. For example the respective homepage for download and registration may be displayed. From their mobile terminal 1 user A can then download the necessary application and can register with the service.

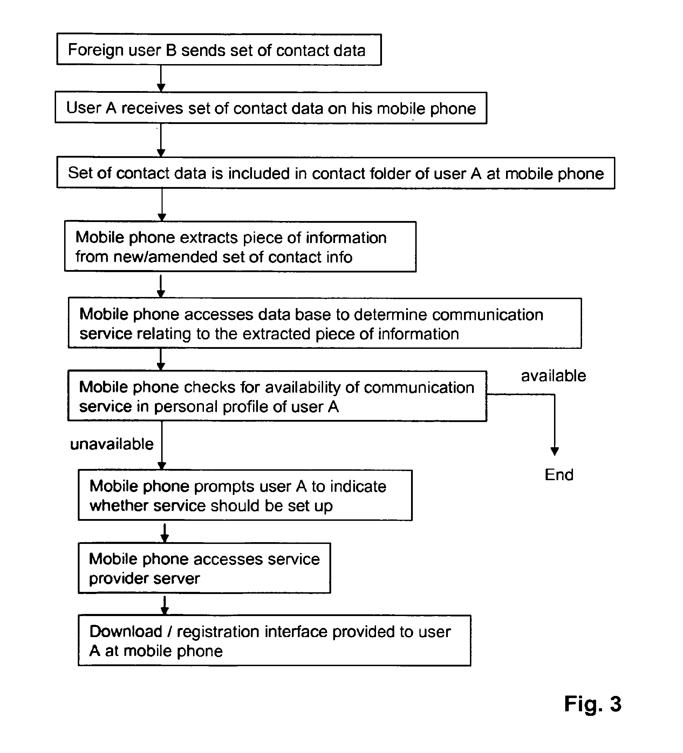

Referring to Figure 3, another example of the method according to the present invention will be described. This example is similar to the example shown in Figure 2 and only the differences to this example will be described in detail. The further steps correspond to the steps as described with respect to Figure 2.

Also in the example shown in Figure 3, user B sends their contact data as a set of foreign contact data 9 to user A. The set of foreign contact data 9 is included into the contact folder of user A on his mobile terminal 1. In this example, the mobile terminal 1 rather then the network server 3 extracts the pieces of information from the new set of foreign contact data 9. The mobile terminal 1 accesses a data base, which may be included in the mobile terminal 1 or may be remote, to determine the respective communication services and service providers related to the extracted pieces of information. The mobile terminal 1 then checks whether the communication services of the providers are already available at the mobile terminal 1. In particular, mobile terminal 1 checks whether indications of these communication services and providers are included in a personal profile of user A. This personal profile may be stored on the mobile terminal 1 or remotely, for example on the network server 3. If no match is found for one of the services or service providers determined from the extracted pieces of information, the mobile terminal 1 will generate a prompt to user A to indicate whether the respective service should be set-up. In case of confirmation of this request, the mobile phone 1 may access the server 7 of the respective service provider and a download and/or registration interface may be displayed to user A at his mobile terminal.

The invention is not limited to the examples as depicted in the Figures and described above. For example, also the transmission of the set of foreign contact data from mobile terminal 1' to mobile terminal 1 via a local connection 5 is within the scope of the present invention. Furthermore, the set of foreign contact data 9 may for example be transmitted from a PC 8 to the mobile terminal 1. In this case also a local connection (not shown) or the mobile communication network 2 can be used.

Another example for the application of the present invention is when a user buys a new mobile phone. They will be able to synchronise all of their SIM and phone contacts via the network. Having purchased the new phone they are then able to add their previous contacts. Depending on the contact details that are synchronized, the mobile phone is either provisioned with appropriate services or the user is able to discover them if they do not already use them.

The inventive method may be initialized by the receipt of contact data, such as a Vcard, when synchronizing via the mobile communication network or with a PC. Also importing and exporting of contact data via local connections, such as Bluetooth, or the mobile communication network as well as manual changes to contact data on the mobile terminal or the network server by adding, editing or deleting data can trigger the inventive method.

Preferably, the data is parsed over the network, that means is checked for contact information, and the network initiates relevant discover and/or set-up routines via the network and onto the mobile terminal so that the user can start using the service. Thereby, the mobile terminal can run relevant routines to ensure that the user and the mobile terminal are able to understand and use the service.

With the present invention data stored in contact folders (Contacts) triggers appropriate discovery and/or set up routines for services. Discovery routines describe the service and encourage registration. Set-up routines enable the user to start using a service (provisioning is triggered and takes place in the background) with a minimum of steps such as confirming a password. All other information may be gathered from data stored in Contacts whether on the terminal, network or SIM card.

The appropriateness of the discovery and set-up routines is dependent on what information is stored in Contacts when it is parsed. Relevant information includes MSISDN and primary email address. For example, a primary email address that uses a Webmail domain could invoke discovery and set for a particular email provider.

Relevant routines are also triggered by changes to Contacts whether on the terminal, network or SIM card. For example, if the user adds a new contact and the new contact has an IM address but the user does not use IM then appropriate routines are invoked.

### Reference Numbers

- 1: Own mobile terminal
- 1': Foreign mobile terminal
- 2: Mobile communication network
- 3: Network operator server
- 4: Data base
- 5: Bluetooth connection
- 6: Internet
- 7: Server
- 8: PC
- 9: Foreign set of contact data

## Claims

1. Method for providing communication services at a mobile terminal (1) of a mobile communication network (2), **characterized in that** it comprises the following steps, which are carried out by at least one part of the mobile communication network:
- receiving at least one set of foreign contact data (9), which is a set of contact data on a person who is not the user of the mobile terminal (1), at a mobile terminal (1);
- analyzing the set of foreign contact data (9),
- extracting at least one piece of information relating to a communication service from the set of foreign contact data (9),
- determining the communication service details of the communication service to which the extracted piece of information relates, and
- triggering a set-up process for the determined communication service,
wherein the set-up process comprises the step of comparing the determined communication service to communication services presently available at the mobile terminal (1) and the set-up routines of the set-up process is limited to new communication services which the user of the mobile terminal (1) is not registered for or does not have the necessary access to.

2. Method according to claim 1, **characterized in that** the availability of a communication service at the mobile terminal (1) is dependent on the user of the mobile terminal (1).

3. Method according to anyone of claims 1 to 2, **characterized in that** the set of foreign contact data (9) is analyzed before being received at the mobile terminal (1).

4. Method according to anyone of claims 1 to 3, **characterized in that** at least the analysis of the set of foreign contact data (9) is carried out at a network entity (3) of the mobile communication network (2).

5. Method according to anyone of claims 1 to 3, **characterized in that** the set-up process includes at least one set-up routine and/or at least one prompt for the user of the mobile terminal (1).

6. Method according to anyone of claims 1 to 5, **characterized in that** analyzing the set of foreign contact data (9) is initialized by a transmission of the set of foreign contact data (9) to or from the mobile terminal (1), by edition of a set of foreign contact data (9) at the mobile terminal (1) and/or by input of a set of foreign contact data (9) at the mobile terminal (1).

7. Method according to anyone of claims 1 to 6, **characterized in that** the communication services are services which require registration of the user.

8. Method according to anyone of claims 1 to 7, **characterized in that** the piece of information extracted from the set of foreign contact data (9) is an indication of a service provider, in particular an email service provider, a real time messaging service provider and/or organization service provider.

9. System for providing communication services at a mobile terminal (1) of a mobile communication network (2), comprising at least one mobile terminal (1) and at least one central processing unit (3), **characterized in that** the system comprises an analyzing unit for analyzing sets of foreign contact data, an extraction unit for extracting information from the set of foreign contact data (9) based on the relation of the information to communication services applicable to mobile terminals and at least one handling unit for handling the extracted information, wherein the handling unit is connected to at least one set-up unit for determination of a communication service to which the extracted information relates and set-up of the determined communication service, wherein the set-up process comprises the step ofcomparing the determined communication service to communication services presently available at the mobile terminal and the set-up routines of the set-up process is limited to new communication services which the user of the mobile terminal is not registered for or does not have the necessary access to.

10. System according to claim 9, **characterized in that** the analyzing unit and extraction unit are located on the network side.

11. System according to claim 9, **characterized in that** the analyzing and extraction unit are located on the mobile terminal.

12. System according to anyone of claims 9 to 11, **characterized in that** the set-up unit comprises a comparator for comparing communication service details derived from the extracted information to communication service details obtained from a user profile unit.

13. Mobile terminal for carrying out a method according to anyone of claims 1 to 9, comprising at least an analyzing unit for analyzing sets of foreign contact data, an extraction unit for extracting information from the set of foreign contact data (9) based on the relation of the information to communication services applicable to mobile terminals and at least one handling unit for handling the extracted information, wherein the handling unit is connected to at least one set-up unit for determination of a communication service and set-up of the determined communication service, wherein the set-up process comprises the step or comparing the determined communication service to communication services presently available at the mobile terminal (1) and the set-up routines of the set-up process is limited to new communication services which the user of the mobile terminal (1) is not registered for or does not have the necessary access to .

## Patentansprüche

1. Verfahren zum Zurverfügungstellen von Kommunikationsdiensten an einem mobilen Endgerät (1) eines mobilen Kommunikationsnetzwerkes (2), **dadurch gekennzeichnet, dass** es die folgenden Schritte umfasst, die von zumindest einem Teil des mobilen Kommunikationsnetzwerkes ausgeführt werden:
- Empfangen von zumindest einem Satz fremder Kontaktdaten (9), der ein Satz von Kontaktdaten zu einer Person ist, die nicht der Benutzer des mobilen Endgerätes (1) ist, an dem mobilen Endgerät (1);
- Analysieren des Satzes fremder Kontaktdaten (9),
- Extrahieren von zumindest einer Information, die sich auf einen Kommunikationsdienst bezieht, aus dem Satz der fremden Kontaktdaten (9);
- Bestimmen der Kommunikationsdienstdetails des Kommunikationsdienstes, auf den sich die extrahierte Information bezieht, und
- Auslösen eines Set-up Prozesses für den bestimmten Kommunikationsdienst, wobei der Set-Up Prozess den Schritt des Vergleichens des bestimmten Kommunikationsdienstes zu Kommunikationsdiensten, die derzeit an dem mobilen Endgerät (1) verfügbar sind, umfasst und die Set-Up Routine des Set-Up Prozesses auf neue Kommunikationsdienste beschränkt ist, für die der Benutzer des mobilen Endgerätes (1) nicht registriert ist oder zu denen der Benutzer nicht den notwendigen Zugriff hat.

2. Verfahren nach Anspruch 1, **dadurch gekennzeichnet, dass** die Verfügbarkeit eines Kommunikationsdienstes an dem mobilen Endgerät (1) von dem Benutzer des mobilen Endgerätes (1) abhängig ist.

3. Verfahren nach einem der Ansprüche 1 oder 2, **dadurch gekennzeichnet, dass** der Satz fremder Kontaktdaten (9) analysiert wird bevor er an dem mobilen Endgerät (1) empfangen wird.

4. Verfahren nach einem der Ansprüche 1 bis 3, **dadurch gekennzeichnet, dass** zumindest die Analyse des Satzes von fremden Kontaktdaten (9) an einer Netzwerkeinheit (3) des mobilen Kommunikationsnetzwerkes (2) ausgeführt wird.

5. Verfahren nach einem der Ansprüche 1 bis 3, **dadurch gekennzeichnet, dass** der Set-up Prozess zumindest eine Set-up Routine und/oder zumindest eine Aufforderung für den Benutzer des mobilen Endgerätes (1) einschließt.

6. Verfahren nach einem der Ansprüche 1 bis 5, **dadurch gekennzeichnet, dass** das Analysieren des Satzes von fremden Kontaktdaten (9) initialisiert wird durch eine Übermittlung des Satzes von fremden Kontaktdaten (9) zu oder von dem mobilen Endgerät (1), durch Editieren eines Satzes von fremden Kontaktdaten (9) an dem mobilen Endgerät (1) und/oder durch Eingabe eines Satzes von fremden Kontaktdaten (9) an dem mobilen Endgerät (1).

7. Verfahren nach einem der Ansprüche 1 bis 6, **dadurch gekennzeichnet, dass** die Kommunikationsdienste Dienste sind, die eine Registrierung des Benutzers voraussetzen.

8. Verfahren nach einem der Ansprüche 1 bis 7, **dadurch gekennzeichnet, dass** die Information, die von dem Satz von fremden Kontaktdaten (9) extrahiert wird, eine Angabe eines Diensteanbieters, insbesondere eines E-Mail-Diensteanbieters, eines Echt-Zeit-Nachrichten-Diensteanbieters und/oder Organisationsdiensteanbieters ist.

9. System zum Zurverfügungstellen von Kommunikationsdiensten an einem mobilen Endgerät (1) eines mobilen Kommunikationsnetzwerkes (2), umfassend zumindest ein mobiles Endgerät (1) und zumindest eine zentrale Verarbeitungseinheit (3), **dadurch gekennzeichnet, dass** das System eine Analysiereinheit zum Analysieren von Sätzen fremder Kontaktdaten, eine Extraktionseinheit zum Extrahieren von Informationen von einem Satz von fremden Kontaktdaten (9) basierend auf dem Verhältnis von Informationen über Kommunikationsdienste, die auf mobile Endgeräte anwendbar sind, und zumindest eine Handhabungseinheit zum Handhaben von extrahierten Informationen, wobei die Handhabungseinheit zu zumindest einer Set-up Einheit zur Bestimmung eines Kommunikationsdienstes, auf den sich die extrahierten Informationen beziehen, und zum Set-up des bestimmten Kommunikationsdienstes, verbunden ist, wobei der Set-Up Prozess den Schritt des Vergleichens des bestimmten Kommunikationsdienstes zu Kommunikationsdiensten, die derzeit an dem mobilen Endgerät (1) verfügbar sind, umfasst und die Set-Up Routine des Set-Up Prozesses auf neue Kommunikationsdienste beschränkt ist, für die der Benutzer des mobilen Endgerätes (1) nicht registriert ist oder zu denen der Benutzer nicht den notwendigen Zugriff hat.

10. System nach Anspruch 9, **dadurch gekennzeichnet, dass** die Analysiereinheit und die Extraktionseinheit auf der Netzwerkseite befindlich sind.

11. System nach Anspruch 9, **dadurch gekennzeichnet, dass** die Analysiereinheit und die Extraktionseinheit auf dem mobilen Endgerät befindlich sind.

12. System nach einem der Ansprüche 9 bis 11, **dadurch gekennzeichnet, dass** die Set-Up-Einheit einen Komparator zum Vergleich von Kommunikationsdienstdetails, die von der extrahierten Information erhalten wurden, mit Kommunikationsdienstdetails, die von einer Benutzer-Profil-Einheit erhalten wurden, umfasst.

13. Mobiles Endgerät zum Ausführen eines Verfahrens nach einem der Ansprüche 1 bis 9, umfassend zumindest eine Analysiereinheit zum Analysieren von Sätzen von fremden Kontaktdaten, eine Extraktionseinheit zum Extrahieren von Informationen von dem Satz von fremden Kontaktdaten (9) basierend auf dem Verhältnis der Information zu den Kommunikationsdiensten, die auf das mobile Endgerät anwendbar sind, und zumindest eine Handhabungseinheit zur Handhabung der extrahierten Informationen, wobei die Handhabungseinheit zu zumindest einer Set-Up-Einheit verbunden ist, zur Bestimmung eines Kommunikationsdienstes und Set-Up des bestimmten Kommunikationsdienstes, wobei der Set-Up Prozess den Schritt des Vergleichens des bestimmten Kommunikationsdienstes zu Kommunikationsdiensten, die derzeit an dem mobilen Endgerät (1) verfügbar sind, umfasst und die Set-Up Routine des Set-Up Prozesses auf neue Kommunikationsdienste beschränkt ist, für die der Benutzer des mobilen Endgerätes (1) nicht registriert ist oder zu denen der Benutzer nicht den notwendigen Zugriff hat.

## Revendications

1. Procédé de fourniture de services de communication au niveau d'un terminal mobile (1) d'un réseau de communication mobile (2), **caractérisé en ce qu'**il comprend les étapes suivantes, qui sont mises en oeuvre par au moins une partie du réseau de communication mobile :
de réception d'au moins un ensemble de données de contact étranger (9), qui est un ensemble de données de contact d'une personne qui n'est pas l'utilisateur du terminal mobile (1), au niveau d'un terminal mobile (1) ;
d'analyse de l'ensemble de données de contact étranger (9),
d'extraction d'au moins un élément d'information se rapportant à un service de communication à partir de l'ensemble de données de contact étranger (9),
de détermination des détails de service de communication du service de communication auquel l'élément d'information extrait se rapporte, et
de déclenchement d'un processus de mise en oeuvre pour le service de communication déterminé,
dans lequel le processus de mise en oeuvre comprend l'étape de comparaison du service de communication déterminé à des services de communication couramment disponibles au niveau du terminal mobile (1) et les sous-programmes de mise en oeuvre du processus de mise en oeuvre sont limités aux nouveaux services de communication pour lesquels l'utilisateur du terminal mobile (1) n'est pas enregistré ou ne dispose pas des accès nécessaires.

2. Procédé selon la revendication 1, **caractérisé en ce que** la disponibilité d'un service de communication au niveau du terminal mobile (1) dépend de l'utilisateur du terminal mobile (1).

3. Procédé selon l'une quelconque des revendications 1 à 2, **caractérisé en ce que** l'ensemble de données de contact étranger (9) est analysé avant d'être reçu au niveau du terminal mobile (1).

4. Procédé selon l'une quelconque des revendications 1 à 3, **caractérisé en ce qu'**au moins l'analyse de l'ensemble de données de contact étranger (9) est mise en oeuvre au niveau d'une entité de réseau (3) du réseau de communication mobile (2).

5. Procédé selon l'une quelconque des revendications 1 à 3, **caractérisé en ce que** le processus de mise en oeuvre comporte au moins un sous-programme de mise en oeuvre et/ou au moins un message d'invite pour l'utilisateur du terminal mobile (1).

6. Procédé selon l'une quelconque des revendications 1 à 5, **caractérisé en ce que** l'analyse de l'ensemble de données de contact étranger (9) est initialisée par une transmission de l'ensemble de données de contact étranger (9) vers le terminal mobile (1) ou à partir de celui-ci, par l'édition d'un ensemble de données de contact étranger (9) au niveau du terminal mobile (1) et/ou par l'entrée d'un ensemble de données de contact étranger (9) sur le terminal mobile (1).

7. Procédé selon l'une quelconque des revendications 1 à 6, **caractérisé en ce que** les services de communication sont des services qui nécessitent l'enregistrement de l'utilisateur.

8. Procédé selon l'une quelconque des revendications 1 à 7, **caractérisé en ce que** l'élément d'information extrait à partir de l'ensemble de données de contact étranger (9) est une indication d'un fournisseur de service, en particulier, un fournisseur de service de courrier électronique, un fournisseur de service de messagerie en temps réel et/ou un fournisseur de service d'organisation.

9. Dispositif destiné à assurer des services de communication au niveau d'un terminal mobile (1) d'un réseau de communication mobile (2), comprenant au moins un terminal mobile (1) et au moins une unité centrale de traitement (3), **caractérisé en ce que** le dispositif comprend une unité d'analyse destinée à analyser des ensembles de données de contact étranger, et une unité d'extraction destinée à extraire des informations à partir de l'ensemble de données de contact étranger (9) sur la base de la relation des informations sur des services de communication applicables à des terminaux mobiles, et au moins une unité de gestion destinée à gérer les informations extraites, dans lequel l'unité de gestion est raccordée à au moins une unité de mise en oeuvre destinée à assurer la détermination d'un service de communication auquel les informations extraites se rapportent et la mise en oeuvre du service de communication déterminé, dans lequel le processus de mise en oeuvre comprend l'étape de comparaison du service de communication déterminé à des services de communication couramment disponibles au niveau du terminal mobile et les sous-programmes de mise en oeuvre du processus de mise en oeuvre sont limités aux nouveaux services de communication pour lesquels l'utilisateur du terminal mobile (1) n'est pas enregistré ou ne dispose pas des accès nécessaires.

10. Dispositif selon la revendication 9, **caractérisé en ce que** l'unité d'analyse et l'unité d'extraction sont situées du côté réseau.

11. Dispositif selon la revendication 9, **caractérisé en ce que** les unités d'analyse et d'extraction sont situées au niveau du terminal mobile.

12. Dispositif selon l'une quelconque des revendications 9 à 11, **caractérisé en ce que** l'unité de mise en oeuvre comprend un comparateur destiné à comparer des détails de service de communication issus des informations extraites sur les détails de service de communication obtenus à partir d'une unité de profil d'utilisateur.

13. Terminal mobile destiné à mettre en oeuvre le procédé selon l'une quelconque des revendications 1 à 9, comprenant au moins une unité d'analyse destinée à analyser des ensembles de données de contact étranger, une unité d'extraction destinée à extraire des informations à partir de l'ensemble de données de contact étranger (9) sur la base de la relation des informations sur les services de communication applicables sur les terminaux mobiles et/ou au moins une unité de gestion destinée à gérer les informations extraites, dans lequel l'unité de gestion est raccordée à au moins une unité de mise en oeuvre destinée à assurer la détermination d'un service de communication et la mise en oeuvre du service de communication déterminé, dans lequel le processus de mise en oeuvre comprend l'étape de comparaison du service de communication déterminé à des services de communication couramment disponibles au niveau du terminal mobile (1) et les sous-programmes du processus de mise en oeuvre sont limités aux nouveaux services de communication pour lesquels l'utilisateur du terminal mobile (1) n'est pas enregistré ou ne dispose pas des accès nécessaires.
